# EUROPÄISCHE PATENTSCHRIFT

(11) **EP 1 250 248 B1**
(45) Veröffentlichungstag und Bekanntmachung des Hinweises auf die Patenterteilung: **20.10.2004**
(21) Anmeldenummer: 01900413.4
(22) Anmeldetag: 10.01.2001
(51) Int. Cl.: B60R 21/16

(54) **SCHUTZVORRICHTUNG MIT EINEM NACH AUFBLASEN EIGENSTEIFEN GASSACK**
PROTECTIVE DEVICE WITH AN AIRBAG WHICH IS INTRINSICALLY RIGID AFTER INFLATION
DISPOSITIF DE PROTECTION POURVU D'UN SAC A AIR COMPRIME A RIGIDITE INTRINSEQUE APRES GONFLAGE

(30) Priorität: 27.01.2000 DE 10003328
(43) Veröffentlichungstag der Anmeldung: 23.10.2002
(73) Patentinhaber: AUTOLIV DEVELOPMENT AB, 447 83 Vargarda (SE)
(72) Erfinder: RÖSCH, Franz, 85221 Dachau (DE)
(74) Vertreter: Müller, Karl-Ernst, Dr., Dipl.-Ing.
(86) Internationale Anmeldenummer: PCT/EP2001/000227
(87) Internationale Veröffentlichungsnummer: WO 2001/054953

(56) Entgegenhaltungen:
- DE-A- 19 653 796

## Beschreibung

Die Erfindung betrifft eine Schutzvorrichtung gegen Seitenaufprall in Kraftfahrzeugen mit einem aufblasbaren, zur Herstellung einer Eigensteifigkeit in dem Gassackgewebe fixierte Versteifungselemente aufweisenden und aus mehreren Kammern bestehenden Gassack, der in seinem nicht aufgeblasenen Zustand vorzugsweise in einem seitlichen Karosserieteil wie Tür oder Dachrahmen oder auch einem Fahrzeugsitz unterbringbar ist.

Eine Schutzvorrichtung mit den gattungsgemäßen Merkmalen ist in der DE 196 53 796 A1 beschrieben. Die in dem Gassackgewebe fixierten Versteifungselemente sollen dabei dem aufgeblasenen Gassack eine derartige Eigensteifigkeit vermitteln, daß auch bei seitlich in der Tür angeordnetem Gassack ein Schutz gegen Seitenaufprall des Kopfes eines Fahrzeuginsassen dann gewährleistet ist, wenn der Seitenairbag nicht durch ein entsprechendes Fahrzeug-Seitenteil oder die Seitenscheibe einer Fahrzeugtür beim Aufprall in Position gehalten wird. Insbesondere in Cabrios fehlt es gänzlich an einem entsprechenden Widerlager für die Abstützung des den Seitenaufprall des Kopfes des Fahrzeuginsassen abfangenden Gassackes; aber auch bei Vorhandensein einer Seitenscheibe geht diese bei seitlichem Aufprallgeschehen häufig zu Bruch, so daß es auch in diesem Fall an der Abstützung des aufgeblasenen Gassackes bei dessen Belastung fehlt.

Zur Herstellung einer entsprechenden Eigensteifigkeit ist in der DE 196 53 796 A1 beschrieben, daß der sich fächerartig entfaltende und dabei flächig aufspannende Gassack Zwischennähte und insbesondere darin eingearbeitete Stäbe aufweist, die in einem gemeinsamen Drehpunkt zusammenlaufen, so daß sich der Gassack bei Auslösung fächerförmig ausbreitet und die Stäbe den Gassack seitlich abstützen. Mit der bekannten Schutzvorrichtung ist allerdings der Nachteil verbunden, daß die Anbringung der Stäbe ein erhebliches zusätzliches Gewicht mit sich bringt, einen entsprechend großen Einbauraum im Fahrzeug benötigt und in ihrer Mechanik auch störanfällig ist.

Der Erfindung liegt daher die Aufgabe zugrunde, eine Schutzvorrichtung mit den gattungsgemäßen Merkmalen zur Verfügung zu stellen, die bei einfacher Ausbildung eine ausreichende Eigensteifigkeit des aufgeblasenen Gassackes gewährleistet und platzsparend im Fahrzeug unterzubringen ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß die Versteifungselemente als auf einer Seite der jeweiligen Gassackkammern angebrachte flächig ausgebildete Abstützelemente ausgebildet sind und daß beim Aufblasen des Gassackes die jeweiligen Kammern eine in etwa zylindrische Gestalt einnehmen und dadurch die flächigen Abstützelemente in eine dem Umfang der aufgeblasenen Kammern entsprechend gekrümmte Gestalt derart überführt werden, daß die Biegesteifigkeit des aufgeblasenen Gassackes in Aufprallrichtung quer zur Erstreckung seiner Kammern erhöht ist. Mit der Erfindung ist der Vorteil verbunden, daß die Abstützelemente gemeinsam mit dem Gassackgewebe im Einbauzustand des Gassackes auf kleinem Raum unterbringbar sind und erst durch die Entfaltung des Gassackes in die Form gebracht werden, in welcher die Abstützelemente eine ausreichende Steifigkeit aufweisen, um die bei einem Seitenaufprall auftretenden Kräfte und Momente aufnehmen zu können. Die an dem Gassackgewebe angeordneten Abstützelemente erhöhen für sich das Gewicht der Schutzvorrichtung nicht in einem nennenswerten Umfang. Weiterhin ergeben sich aus der Anordnung der Abstützelemente keine Einschränkungen oder Anforderungen an die Anordnung des Gassackes bzw. von dessen einzelnen Kammern im Kraftfahrzeug.

Nach einem Ausführungsbeispiel der Erfindung kann vorgesehen sein, daß die zylindrischen Kammern des Gassackes senkrecht zur Bodengruppe des Kraftfahrzeuges angeordnet sind. Alternativ ist es auch möglich, den Gassack im Kraftfahrzeug so unterzubringen, daß die zylindrischen Kammern in aufgeblasenem Zustand eine Lage im Winkel zur Bodengruppe des Kraftfahrzeuges einnehmen.

Daraus ergibt sich eine Überlagerung der Versteifungswirkung in zur Bodengruppe senkrechter Richtung. Es hat sich dabei als zweckmäßig ergeben, wenn die Kammern des Gassackes parallel zueinander angeordnet sind.

Nach Ausführungsbeispielen der Erfindung können die Abstützelemente bei nicht aufgeblasenem Gassack eine flache Form aufweisen oder bereits mit einer Vorwölbung versehen sein.

Es ist vorgesehen, daß die Abstützelemente als dünne, hochflexible Lamellen ausgebildet sind, die entweder aus Kunststoff oder aus einem Metall bestehen können.

Hinsichtlich der Verbindung der Abstützelemente mit dem Gassackgewebe kann vorgesehen sein, daß das Gassackgewebe zur Aufnahme der einzelnen Abstützelemente doppelwandig ausgebildet ist und das jeweilige Abstützelement in eine so gebildete Tasche des Gassackgewebes eingeschoben ist. Alternativ kann vorgesehen sein, daß die Abstützelemente in das Gewebe des Gassackes eingewebt oder aber auf das Gewebe des Gassackes aufgelegt und mit dem Gassackgewebe vernäht oder verklebt sind.

Nach Ausführungsbeispielen der Erfindung kann vorgesehen sein, daß das Abstützelement in der zugehörigen Kammer des Gassackes auf der Innenseite des Gassackgewebes oder auf dessen Außenseite angeordnet bzw. angebracht ist.

Bezüglich der Orientierung der Abstützelemente an dem Gassack kann vorgesehen sein, daß die Abstützelemente auf der der Fahrzeugaußenseite zugewandten Seite des Gassackes angeordnet sind oder auf der der Fahrzeuginnenseite zugewandten Seite des Gassackes.

Um dem Einknicken der Abstützelemente bei aufgeblasenem Gassack weiter entgegenzuwirken, kann vorgesehen sein, daß ein der Aufbewahrung des nicht aufgeblasenen Gassackes dienendes Gehäuse den bei aufgeblasenem Gassack eine gekrümmte Gestalt aufweisenden Abstützelementen angepaßte Aufnahmen zur Fixierung der Abstützelemente in deren biegesteifer Stellung aufweist.

Nach einem Ausführungsbeispiel der Erfindung kann vorgesehen sein, daß das Gewebe des Gassackes mit den angebrachten Abstützelementen durch Rollfaltung in das Gehäuse einbringbar ist; auch andere Faltmethoden sind anwendbar.

Nach Ausführungsbeispielen der Erfindung ist der Gassack einschließlich der in ihm angeordneten Abstützelemente in einem seitlichen Karosserieteil wie Tür oder Dachrahmen unterbringbar oder an einem Fahrzeugsitz anzuordnen.

In der Zeichnung ist ein Ausführungsbeispiel der Erfindung wiedergegeben, welches nachstehend beschrieben ist. Es zeigen:
- Fig. 1: eine ausschnittsweise Seitenansicht auf eine in einem Fahrzeug untergebrachte Schutzvorrichtung bei aufgeblasenem Gassack,
- Fig. 2: die Schutzvorrichtung gemäß Figur 1 in einer anderen Ausführungsform mit an einem Fahrzeugsitz angeordnetem Gassack,
- Fig. 3: die Schutzvorrichtung gemäß Figuren 1 oder 2 in einer weiteren Ausführungsform mit einem in dem Dachrahmen eines Fahrzeuges untergebrachten Gassack,
- Fig. 4: die Schutzvorrichtung gemäß Figur 1 in einer Draufsicht,
- Fig. 5: das Gassackgewebe eines Gassackes mit daran angeordneten Abstützelementen in einer Draufsicht.
- Fig. 6: den Gegenstand der Figur 5 in einer anderen Ausführungsform mit vorgewölbten Abstützelementen,
- Fig. 7: den Gegenstand der Figur 5 in einer weiteren abgewandelten Ausführungsform mit im Inneren der Kammern angeordneten Abstützelementen.

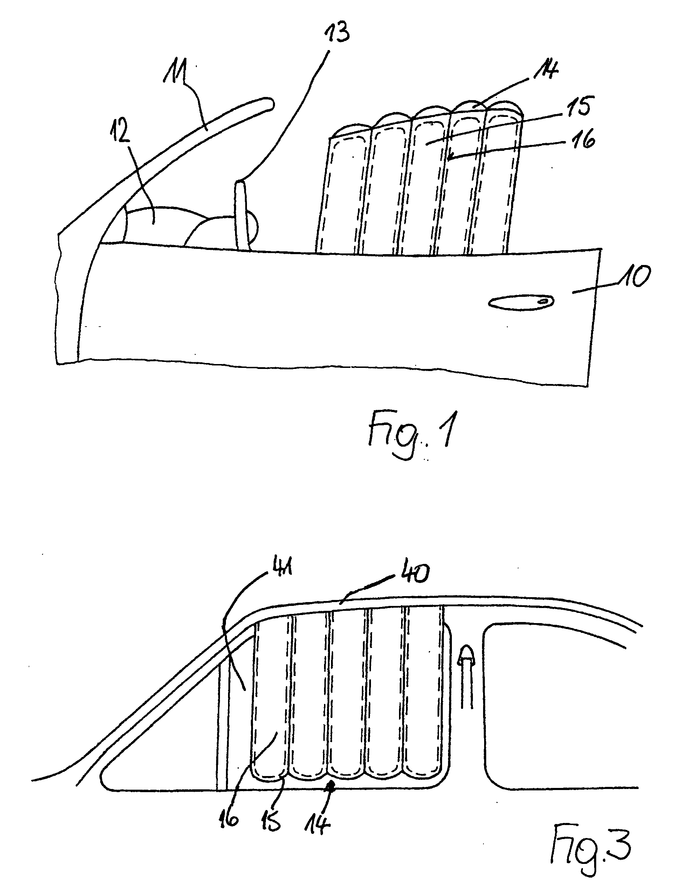

Soweit in Figur 1 die Einbaulage einer Schutzvorrichtung in ein Kraftfahrzeug schematisch dargestellt ist, handelt es sich dabei um ein Cabrio mit einer Fahrzeugtür 10, einer A-Säule 11, einer Instrumententafel 12 mit Lenkrad 13. Insoweit ist insbesondere bei offenem Seitenfenster fahrzeugseitig keine Abstützung für den sich im Unfallgeschehen entfaltenden, in der Fahrzeugtür 10 untergebrachten und als Seitenairbag ausgebildeten Gassack 14 gegeben. Der Gassack 14 bildet in aufgeblasenem Zustand parallel zueinander angeordnete und senkrecht zur Bodengruppe des Fahrzeuges ausgerichtete zylindrische Kammern 15 aus, wobei auf der der Fahrzeugaußenseite zugewandten Seite der Kammern 15 an dem Gassack 14 der Vermittlung einer Eigensteifigkeit dienende Abstützelemente 16 angeordnet sind, die bei aufgeblasenem Gassack eine der Umfangsform der zylindrischen Kammern 15 des Gassackes 14 entsprechende gekrümmte Gestalt aufweisen, in welcher der Gassack 14 mit Kammern 15 in Aufprallrichtung quer zur Erstreckung der Kammern 15 eine ausreichende Eigensteifigkeit aufweist, um die bei Seitenaufprall auftretenden Kräfte und Momente abzufangen.

Bei dem in Figur 2 dargestellten Ausführungsbeispiel sind die Kammern 15 des Gassackes 14 nicht senkrecht zur Bodengruppe des Kraftfahrzeuges wie bei dem Ausführungsbeispiel gemäß Figur 1, sondern im Winkel dazu angeordnet. Weiterhin ist bei dem in Figur 2 dargestellten Ausführungsbeispiel der Gassack 14 an einem Fahrzeugsitz 30 angeordnet, auf dessen Sitzteil 31 eine mit 35 bezeichnete Person sitzt, um die Schutzwirkung des Gassackes 14 zu verdeutlichen. Der Gassack 14 ist im nicht aufgeblasenem Zustand in der Rückenlehne 32 des Fahrzeugsitzes 30 untergebracht und entfaltet sich bei Auslösung daraus.

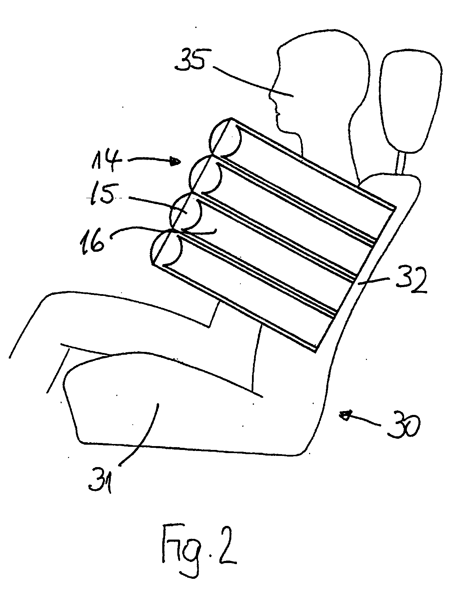

Bei dem in Figur 3 dargestellten Ausführungsbeispiel ist der Gassack 14 in dem Dachrahmen 40 eines Kraftfahrzeuges angeordnet und in nicht aufgeblasenem Zustand im Bereich des Dachrahmens 40 zusammengefaltet und gehaltert. Bei Auslösung erstrecken sich die Kammern 15 des Gassackes 14 nach unten in Richtung auf die Fahrzeugtür 10 und decken dabei das Seitenfenster 41 des Kraftfahrzeuges ab.

Wie sich aus der Darstellung in Figur 4 ergibt, weist das der Aufnahme des nicht aufgeblasenen Gassackes dienende und in der Fahrzeugtüre 10 untergebrachte Gehäuse 17 Aufnahmen 18 zur Abstützung der Abstützelemente 16 auf, wobei die Aufnahmen 18 in ihrer Formgebung der gekrümmten Gestalt der Abstützelemente 16 entsprechen, welche diese durch das Aufblasen des Gassackes 14 bzw. von dessen zylindrischen Kammern 15 einnehmen.

Bei dem dargestellten Ausführungsbeispiel bildet das Gewebe 19 des Gassackes 14 die Kammern 15 durch zwischen den Kammern 15 angeordnete Säume 20 aus. Im Bereich der Kammern 15 ist das Gewebe 19 durch Anordnung einer Zwischenwand 22 derart doppelwandig ausgebildet, daß sich Taschen 21 ergeben, in welche die Abstützelemente 16 eingeschoben sind.

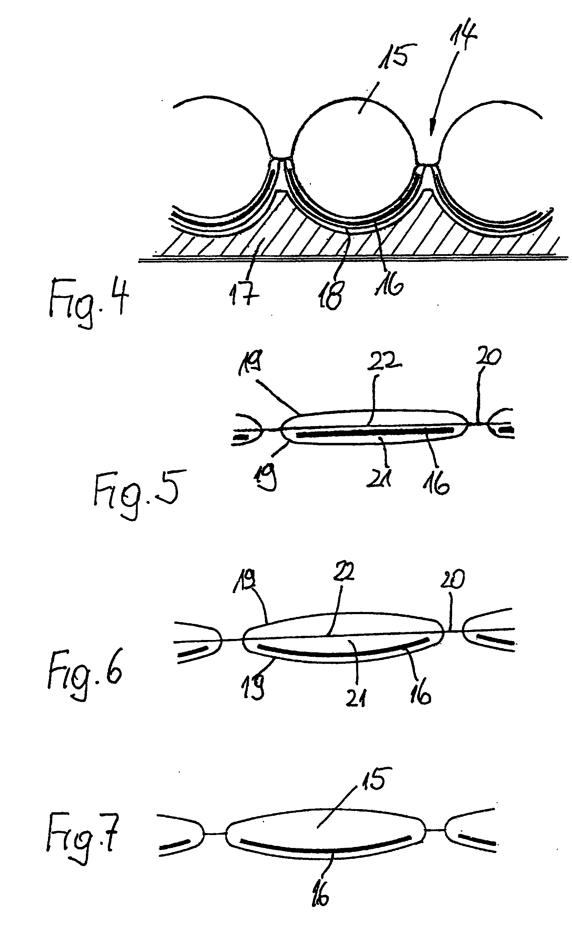

Wie sich aus Figur 5 ergibt, weisen die Abstützelemente 16 bei noch nicht aufgeblasenem Gassack 14 zunächst eine flache Form auf, in welcher die Abstützelemente gemeinsam mit dem Gewebe 19 des Gassackes 14 in das Gehäuse 17 eingerollt bzw. eingefaltet und somit in dem zugeordneten Fahrzeugteil verstaut werden können. In einer alternativen und in Figur 6 dargestellten Ausführungsform können die Abstützelemente 16 auch eine vorgewölbte Form aufweisen. Gemäß Figur 7 kann weiterhin vorgesehen sein, daß die Abstützelemente 16 unmittelbar im Inneren der Kammern 15 angeordnet sind.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Schutzvorrichtung gegen Seitenaufprall in Kraftfahrzeugen (40) mit einem aufblasbaren, zur Herstellung einer Eigensteifigkeit in dem Gassackgewebe fixierte Versteifungselemente (16) aufweisenden und aus mehreren Kammern (15) bestehenden Gassack (14), **dadurch gekennzeichnet, daß** die Versteifungselemente als auf einer Seite der jeweiligen Gassackkammern (15) angebrachte flächig ausgebildete Abstützelemente (16) ausgebildet sind und daß beim Aufblasen des Gassackes (14) die jeweiligen Kammern (15) eine in etwa zylindrische Gestalt einnehmen und dadurch die flächigen Abstützelemente (16) in eine dem Umfang der aufgeblasenen Kammern (15) entsprechend gekrümmte Gestalt derart überführt werden, daß die Biegesteifigkeit des aufgeblasenen Gassackes (14) in Aufprallrichtung quer zur Erstreckung seiner Kammern (15) erhöht ist.

2. Schutzvorrichtung nach Anspruch 1, **dadurch gekennzeichnet, daß** die Kammern (15) des Gassackes (14) senkrecht zur Bodengruppe des Kraftfahrzeuges angeordnet sind.

3. Schutzvorrichtung nach Anspruch 1, **dadurch gekennzeichnet, daß** die Kammern (15) des Gassackes (14) im Winkel zur Bodengruppe des Kraftfahrzeuges angeordnet sind.

4. Schutzvorrichtung nach einem der Ansprüche 1 bis 3, **dadurch gekennzeichnet, daß** die Kammern (15) parallel zueinander angeordnet sind.

5. Schutzvorrichtung nach einem der Ansprüche 1 bis 4, **dadurch gekennzeichnet, daß** die Abstützelemente (16) bei nicht aufgeblasenem Gassack (14) eine flache Ausbildung aufweisen.

6. Schutzvorrichtung nach einem der Ansprüche 1 bis 4, **dadurch gekennzeichnet, daß** die Abstützelemente (16) bei nicht aufgeblasenem Gassack (14) mit einer Vorwölbung vesehen sind.

7. Schutzvorrichtung nach einem der Ansprüche 1 bis 6, **dadurch gekennzeichnet, daß** die Abstützelemente (16) als dünne, hochflexible Lamellen ausgebildet sind.

8. Schutzvorrichtung nach Anspruch 7, **dadurch gekennzeichnet, daß** die Lamellen aus Kunststoff bestehen.

9. Schutzvorrichtung nach Anspruch 7, **dadurch gekennzeichnet, daß** die Lamellen aus Metall bestehen.

10. Schutzvorrichtung nach einem der Ansprüche 1 bis 9, **dadurch gekennzeichnet, daß** das Gassackgewebe (19) zur Aufnahme der einzelnen Abstützelemente (16) doppelwandig ausgebildet ist und das jeweilige Abstützelement (16) in eine so gebildete Tasche (21) des Gassackgewebes (19) eingeschoben ist.

11. Schutzvorrichtung nach einem der Ansprüche 1 bis 9, **dadurch gekennzeichnet, daß** die Abstützelemente in das Gewebe (19) des Gassackes (14) eingewebt sind.

12. Schutzvorrichtung nach einem der Ansprüche 1 bis 9, **dadurch gekennzeichnet, daß** die Abstützelemente (16) auf das Gewebe (19) des Gassackes (14) aufgelegt und mit dem Gewebe (19) vernäht sind.

13. Schutzvorrichtung nach einem der Ansprüche 1 bis 12, **dadurch gekennzeichnet, daß** das Abstützelement (16) in der zugehörigen Kammer (15) des Gassackes (14) auf der Innenseite des Gewebes (19) angeordnet ist.

14. Schutzvorrichtung nach einem der Ansprüche 1 bis 12, **dadurch gekennzeichnet, daß** das Abstützelement (16) in der zugehörigen Kammer (15) des Gassackes (14) auf der Außenseite des Gewebes (19) angeordnet ist.

15. Schutzvorrichtung nach einem der Ansprüche 1 bis 14, **dadurch gekennzeichnet, daß** die Abstützelemente (16) auf der der Fahrzeugaußenseite zugewandten Seite des Gassackes (14) angeordnet sind.

16. Schutzvorrichtung nach einem der Ansprüche 1 bis 14, **dadurch gekennzeichnet, daß** die Abstützelemente (16) auf der der Fahrzeuginnenseite zugewandten Seite des Gassackes (14) angeordnet sind.

17. Schutzvorrichtung nach einem der Ansprüche 1 bis 16, **dadurch gekennzeichnet, daß** ein der Aufbewahrung des nicht aufgeblasenem Gassackes (14) dienendes Gehäuse (17) den bei aufgeblasenem Gassack (14) eine gekrümmte Gestalt aufweisenden Abstützelementen (16) angepaßte Aufnahmen (18) zur Fixierung der Abstützelemente (16) in deren biegesteifer Stellung aufweist.

18. Schutzvorrichtung nach einem der Ansprüche 1 bis 17, **dadurch gekennzeichnet, daß** das Gewebe (19) des Gassackes (14) mit den angebrachten Abstützelementen (16) durch Rollfaltung in das Gehäuse (17) einbringbar ist.

19. Schutzvorrichtung nach einem der Ansprüche 1 bis 18, **dadurch gekennzeichnet, daß** der Gassack (14) einschließlich der an ihm angeordneten Abstützelemente (16) in einem seitlichen Karosserieteil wie Tür oder Dachrahmen angeordnet ist.

20. Schutzvorrichtung nach einem der Ansprüche 1 bis 18, **dadurch gekennzeichnet, daß** der Gassack (14) einschließlich an ihm angeordneten Abstützelemente (16) an einem Fahrzeugsitz angeordnet ist.

## Claims

1. Side impact protection apparatus in motor vehicles (40) comprising an inflatable gas bag (14), which comprises a plurality of chambers (15) and has stiffening elements (16) fixed in the gas bag fabric in order to establish an inherent stability, **characterized in that** the stiffening elements take the form of planar support elements (16) provided at one side of the respective gas bag chambers (15) and that, when gas bag (14) inflates, the respective chambers (15) adopt an approximately cylindrical shape and consequently the planar support elements (16) are transformed into a shape curved in accordance with the periphery of the inflated chambers (15), thereby increasing the deflection resistance of the inflated gas bag (14) in impact direction transversely relative to the extension of its chambers (15).

2. Protection apparatus according to claim 1, **characterized in that** the chambers (15) of the gas bag (14) are disposed perpendicular to the undercarriage of the motor vehicle.

3. Protection apparatus according to claim 1, **characterized in that** the chambers (15) of the gas bag (14) are disposed at an angle to the undercarriage of the motor vehicle.

4. Protection apparatus according to one of claims 1 to 3, **characterized in that** the chambers (15) are disposed parallel to one another.

5. Protection apparatus according to one of claims 1 to 4, **characterized in that** the support elements (16) in the non-inflated state of the gas bag (14) are of a flat construction.

6. Protection apparatus according to one of claims 1 to 4, **characterized in that** the support elements (16) in the non-inflated state of the gas bag (14) are provided with a forward camber.

7. Protection apparatus according to one of claims 1 to 6, **characterized in that** the support elements (16) take the form of thin, highly flexible slats.

8. Protection apparatus according to claim 7, **characterized in that** the slats are made of plastics material.

9. Protection apparatus according to claim 7, **characterized in that** the slats are made of metal.

10. Protection apparatus according to one of claims 1 to 9, **characterized in that** the gas bag fabric (19) for receiving the individual support elements (16) is of a double-walled construction and the respective support element (16) is inserted into the pocket (21) thus formed in the gas bag fabric (19).

11. Protection apparatus according to one of claims 1 to 9, **characterized in that** the support elements are woven into the fabric (19) of the gas bag (14).

12. Protection apparatus according to one of claims 1 to 9, **characterized in that** the support elements (16) are laid onto the fabric (19) of the gas bag (14) and stitched to the fabric (19).

13. Protection apparatus according to one of claims 1 to 12, **characterized in that** the support element (16) is disposed in the appropriate chamber (15) of the gas bag (14) on the inside of the fabric (19).

14. Protection apparatus according to one of claims 1 to 12, **characterized in that** the support element (16) is disposed in the appropriate chamber (15) of the gas bag (14) on the outside of the fabric (19).

15. Protection apparatus according to one of claims 1 to 14, **characterized in that** the support elements (16) are disposed at the side of the gas bag (14) facing the vehicle exterior.

16. Protection apparatus according to one of claims 1 to 14, **characterized in that** the support elements (16) are disposed at the side of the gas bag (14) facing the vehicle interior.

17. Protection apparatus according to one of claims 1 to 16, **characterized in that** a housing (17) used to store the non-inflated gas bag (14) comprises receivers (18), which are adapted to the support elements (16) having a curved shape in the inflated state of the gas bag (14), for fixing the support elements (16) in their deflection-resistant position.

18. Protection apparatus according to one of claims 1 to 17, **characterized in that** the fabric (19) of the gas bag (14) with the attached support elements (16) is introducible by means of rolled folding into the housing (17).

19. Protection apparatus according to one of claims 1 to 18, **characterized in that** the gas bag (14) including the support elements (16) disposed thereon is disposed in a side body part such as a door or roof frame.

20. Protection apparatus according to one of claims 1 to 18, **characterized in that** the gas bag (14) including the support elements (16) disposed thereon is disposed on a vehicle seat.

## Revendications

1. Dispositif de protection contre les chocs latéraux dans des véhicules à moteur (40) comprenant un sac à air comprimé (14) gonflable composé de plusieurs compartiments (15), et présentant des éléments raidisseurs fixés dans le tissu du sac à air comprimé afin de constituer une rigidité intrinsèque, **caractérisé en ce que** les éléments raidisseurs sont conformés, sur un côté de chaque compartiment (15) du sac à air comprimé, en éléments d'appui (16) apposés en nappe et **en ce que**, lors du gonflement du sac à air comprimé (14), chaque compartiment (15) prend une forme à peu près cylindrique, ce qui a pour effet de conférer aux éléments d' appui (16) en nappe, une forme recourbée correspondant à la circonférence du compartiment (15) gonflé, de manière à augmenter la rigidité du sac à air comprimé (14) gonflé dans le sens d'impact perpendiculaire à l'étendue de ses compartiments (15).

2. Dispositif de protection selon la revendication 1, **caractérisé en ce que** les compartiments (15) du sac à air comprimé (14) sont disposés perpendiculairement par rapport au bas de caisse du véhicule à moteur.

3. Dispositif de protection selon la revendication 1, **caractérisé en ce que** les compartiments (15) du sac à air comprimé (14) sont disposés selon un certain angle par rapport au bas de caisse du véhicule à moteur.

4. Dispositif de protection selon l'une des revendications 1 à 3 **caractérisé en ce que** les compartiments (15) sont disposés parallèlement l'un par rapport à l'autre.

5. Dispositif de protection selon l'une des revendications 1 à 4 **caractérisé en ce que** les éléments d'appui (16) présentent, lorsque le sac à air comprimé (14) n'est pas gonflé, une configuration plane.

6. Dispositif de protection selon l'une des revendications 1 à 4 **caractérisé en ce que** les éléments d' appui (16) présentent une pré-courbure, lorsque le sac à air comprimé (14) n'est pas gonflé.

7. Dispositif de protection selon l'une des revendications 1 à 6 **caractérisé en ce que** les éléments d'appui (16) sont conformés en lamelles fines, hautement flexibles.

8. Dispositif de protection selon la revendication 7 **caractérisé en ce que** les lamelles sont en plastique.

9. Dispositif de protection selon la revendication 7 **caractérisé en ce que** les lamelles sont en métal.

10. Dispositif de protection selon l'une des revendications 1 à 9 **caractérisé en ce que** le tissu (19) du sac à air comprimé est conçu avec une double paroi afin de loger les éléments d'appui (16) et que chaque élément d'appui (16) est glissé dans une poche (21) ainsi formée du tissu (19) du sac à air comprimé.

11. Dispositif de protection selon l'une des revendications 1 à 9 **caractérisé en ce que** les éléments d'appui sont imbriqués au moment du tissage dans le tissu (19) du sac à air comprimé (14).

12. Dispositif de protection selon l'une des revendications 1 à 9 **caractérisé en ce que** les éléments d'appui (16) sont appliqués sur le tissu (19) du sac à air comprimé (14) puis cousus avec le tissu (19).

13. Dispositif de protection selon l'une des revendications 1 à 12 **caractérisé en ce que** l'élément d'appui (16) est disposé, dans le compartiment (15) correspondant du sac à air comprimé (14), sur la face interne du tissu (19).

14. Dispositif de protection selon l'une des revendications 1 à 12 **caractérisé en ce que** l'élément d'appui (16) est disposé, dans le compartiment (15) correspondant du sac à air comprimé (14), sur la face externe du tissu (19).

15. Dispositif de protection selon l'une des revendications 1 à 14 **caractérisé en ce que** les éléments d'appui (16) sont disposés sur la face du sac à air comprimé (14) qui est orientée vers l'extérieur du véhicule.

16. Dispositif de protection selon l'une des revendications 1 à 14 **caractérisé en ce que** les éléments d'appui (16) sont disposés sur la face du sac à air comprimé (14) qui est orientée vers l'intérieur du véhicule.

17. Dispositif de protection selon l'une des revendications 1 à 16 **caractérisé en ce qu'**un boîtier (14) servant à conserver le sac à air comprimé (14) non gonflé présente, lorsque le sac à air comprimé (14) est gonflé, des logements ( 18) adaptés aux éléments d'appui (16) présentant une forme recourbée afin de fixer les éléments d'appui (16) dans leur position rigide.

18. Dispositif de protection selon l'une des revendications 1 à 17 **caractérisé en ce que** le tissu (19) du sac à air comprimé (14) comportant les éléments d'appui (16) peut être replié en accordéon dans le boîtier (17).

19. Dispositif de protection selon l'une des revendications 1 à 18 **caractérisé en ce que** le sac à air comprimé (14) ainsi que les éléments d'appui (16) qu'il comporte, sont disposés dans une pièce latérale de la carrosserie telle que la portière ou le cadre de toit.

20. Dispositif de protection selon l'une des revendications 1 à 18 **caractérisé en ce que** le sac à air comprimé (14) ainsi que les éléments d'appui (16) qu'il comporte sont disposés sur un siège du véhicule.
